# EUROPEAN PATENT APPLICATION

(11) **EP 4 467 863 A1**
(43) Date of publication of application: **27.11.2024**
(21) Application number: 23175503.4
(22) Date of filing: 25.05.2023
(51) Int. Cl.: F16M 11/18, F16M 11/12

(54) **JOINT DEVICE**

(71) Applicant: Aptiv Technologies AG, 8200 Schaffhausen (CH)
(72) Inventor: BRINKMANN, Jonas, Dublin, 2 (IE); ABBRUZZESE, Gianmarco, Dublin, 2 (IE)
(74) Representative: Lewis Silkin LLP

(57) **Abstract**

A joint device (15) for use with a mounting apparatus (10), such as used in vehicle sensor testing. The device comprises a first end section (21), a second intermediate connector section (23) and a third end section (25), wherein a joint is provided between each section. Particularly, a hinge joint (24) having one axis of movement (D-D) connects the first and second sections, while a cross joint (27) connects the second and third sections, enabling two axes of movement (E-E, F-F). Three joint devices are assembled into a mounting apparatus that has a first frame (12) moveable relative to a second frame (14) by linear actuators (16). The joint devices enable controlled tilting of the first frame (12) about yaw and pitch axes, and also translational movement in z-direction by activating the linear actuators.

## Description

### Introduction

The present disclosure relates to a joint device, particularly for use in a multi-axis motion fixture, relevant to testing of vehicular sensor units.

### Background

Modern vehicles which possess autonomous driving functionality require precise sensing of their immediate environment and beyond to be operated safely. This is often achieved by a variety of sensors, such as one or more radar sensors that are mounted to the vehicle body, e.g. behind a fascia element such as a vehicle bumper.

During the radar integration process (simulation and tests) of the vehicle's design, it must be ensured that the radar fulfils integrated sensor KIPs. Verification and correlation between simulation and test requires precise measurements of radar sensor behaviour, as located behind a fascia, in an anechoic chamber and at a distance from a radar target simulator (RTS). Important aspects for radar integration are, among other things, the placement, shape, thickness, angles and distance of the car body parts (e.g. fascia/bumper) to the sensor. Many tests and simulations must be done for studies and calibration.

Testing is undertaken in an isolated environment (e.g. anechoic chamber) where there is good control over target size and other parameters (speed, amplitude, position) to verify radar performance over mechanical tolerances of assembly and to fulfil functional requirements in terms of accuracy and detection range/ability.

Currently, radar sensor tests may be performed by mounting a sensor to a robotic arm and further mounting the fascia in front of the sensor, with a positioning device for setting the distance between radar and fascia.

The test method typically involves the radar sensor unit, mounted on the robotic arm, being moved completely (e.g. azimuth elevation, translation x, y, z) within the range of field of view of the radar to measure the radar detection parameters with the fascia in place. The test is repeated with/without fascia to measure signal degradation. As such, the positioning device may include several joints to articulate movement.

Existing proposals to increase the range of motion of fascia relative to the sensor/robot arm mount require complex configurations that increase cost and weight or can only be controlled by dedicated software.

Many joint types are available that may be integrated into the design of the sensor mounting unit. For example, a joint may be needed between a linear actuator at a base frame and a frame that is to be moved about several axes. Known joint types include cross or universal joints, hinges and ball joints.

### Summary

According to the above, a need has been identified to provide a joint device, particularly suited for use with mounting units for radar test rigs.

A first aspect is outlined according to claim 1 of the appended claims. Broadly, there is provided a joint device, e.g. for use with a multiple axis motion fixture, comprising: a first end portion for coupling to a linear actuator; a connector portion; and a second end portion for coupling to a rotatably moveable object; wherein the first end portion is pivotably attached to a proximate end of the connector portion about a pivot having one axis of movement, being a first axis, and the second end portion is pivotably attached to a distal end of the connector portion about a pivot having at least two axes of movement, being a second axis and third axis respectively. The second axis can be parallel to the first axis and the third axis perpendicular to the first and second axes.

In this way, the device enables a translation of linear motion, e.g. from the linear actuator, into rotary motion while also allowing for the rotation of an axis. By contrast, prior art devices with a similar function were not able to hold a constant rotation point, including trial of a double Cardan joint, where two universal joints are joined by an intermediate shaft.

In embodiments, the second and third axes intersect. In this way, the second and third axes form a cross joint, such as found in a universal joint.

In embodiments, the connector portion is a rigid rod/shaft.

The use of one joint device enables the translation of linear motion into rotation. With the use of two actuators and joints, rotation around two axes with a fixed pivot point is achievable. Adding a third joint allows for rotation around two axes with a constant pivot point, as well as movement in the z-axis direction. This configuration is useful for implementation in a multiple (i.e. up to six)-axis motion fixture for testing of automotive sensors.

The joint device, as a singular component, may also be considered a hybrid joint comprising: a first shaft/part; a second shaft/part; and a third shaft/part; wherein the first shaft is pivotably connected to a proximate end of the second shaft by a hinge having one axis of movement, and the third shaft is pivotably connected to a distal end of the second shaft by a joint having two axes of movement.

In embodiments, one of the two axes of movement of the third shaft is parallel to the one axis of movement of the hinge. The other axis may be perpendicular.

In embodiments, the hinge connection between the first and second shaft comprises a first yoke and a pivot pin.

In embodiments, the pivotal connection between the second and third shafts comprises two mating yokes and a cross member. In other words, the connection is a universal joint enabling relative movement of the second and third shafts about two axes.

A universal joint is designed to transmit torque between two shafts that are not necessarily aligned with each other. The cross member allows the shafts to rotate relative to each other, while trunnions provide a smooth and efficient transmission of torque.

The transmission device of the invention may be considered a shaft incorporating two joints, a first joint enabling only one freedom of movement about a first axis and a second joint enabling freedom of movement about second and third axes. The third axis may be perpendicular to the first two axes. The second joint could be comprised of two joint portions, respectively pivotable about the second and third axes.

In embodiments, the shafts/portions may be made of steel or another suitable strong cast or machined material.

The invention facilitates, in addition to mounting of the sensor, more flexibility and control for verification tests via a mount system for the vehicle part that moves independently from the sensor. Particularly, it may provide a manual and accurate control of fascia (i.e. the vehicle part) position against the sensor (e.g. radar)

Accordingly, any problems of weight, manual control and cost are solved by an assembly of simple joint devices that can be made from light materials such as aluminium and plastic. It is possible to automate, by servo motors or the like, relative movement of the mounting system and joint devices.

In general, provision may be made for movement of the vehicle part (e.g. fascia, bumper, etc) and/or sensor mount in any direction including pitch, yaw, roll, i.e. up to six degrees of freedom including three translational motions and three rotational motions. As is known, the classic example of movement in three-dimensional space can entail translational movements forward and back, left and right, and up and down; and rotational movement about the X, Y, and Z axes (defining roll, yaw and pitch respectively).

In one example a sensor is mounted to a sensor mount that is in turn connected to a robotic arm. A method of use is performed in the context of testing properties of a radar sensor when the vehicle part is disposed between it and a radar target simulator.

According to a second broad aspect, a mounting apparatus may comprising: a first frame; a second frame (either of which could be alternatively termed "a bracket"); and at least two joint devices, as described herein, wherein each joint device is coupled at one end to a linear actuator extending from the second frame toward the first frame and coupled at the other end to the first frame; so that extension of a linear actuator is able to cause movement such as tilting yaw/pitch movement, through a joint device, of the first frame relative to the second frame.

### Brief Description of Drawings

Illustrative embodiments will now be described with reference to the accompanying drawings in which:
Figure 1 illustrates a frontal overview of a sensor testing apparatus which implements the joint device of the invention;
Figure 2 illustrates a rear overview of the apparatus;
Figure 3 illustrates an overview of the joint device of the invention;
Figure 4 illustrates a first schematic diagram of the device in use;
Figure 5 illustrates a second schematic diagram of the device in use;
Figure 6 illustrates a side view of the apparatus configured in a first position;
Figure 7 illustrates a side view of the apparatus configured in a second position;
Figure 8 illustrates an end view of the apparatus corresponding to Figure 6; and
Figure 9 illustrates an end view of the apparatus configured in a third position.

### Detailed Description

The following description presents exemplary embodiments and, together with the drawings, serves to explain principles of the invention. However, the scope of the invention is not intended to be limited to the precise details of the embodiments or exact adherence with all features and/or method steps, since variations will be apparent to a skilled person and are deemed also to be covered by the description. Terms for components used herein should be given a broad interpretation that also encompasses equivalent functions and features. In some cases, several alternative terms (synonyms) for structural features have been provided, sometimes separated by a "/" symbol to indicate alternative terms, but such terms are not intended to be exhaustive. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "sideways", "upper" and "lower" are used for convenience of explanation usually with reference to the orientation shown in illustrations and are not intended to be ultimately limiting if an equivalent function can be achieved with an alternative dimension and/or direction. Indeed, in the present case a term such as "horizontal" axis or "vertical" axis can be affected by the orientation imposed on the sensor mounting structure by the robotic arm. Therefore, all directional terms are relative to each other.

The description herein refers to embodiments with particular combinations of steps or features, however, it is envisaged that further combinations and cross-combinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

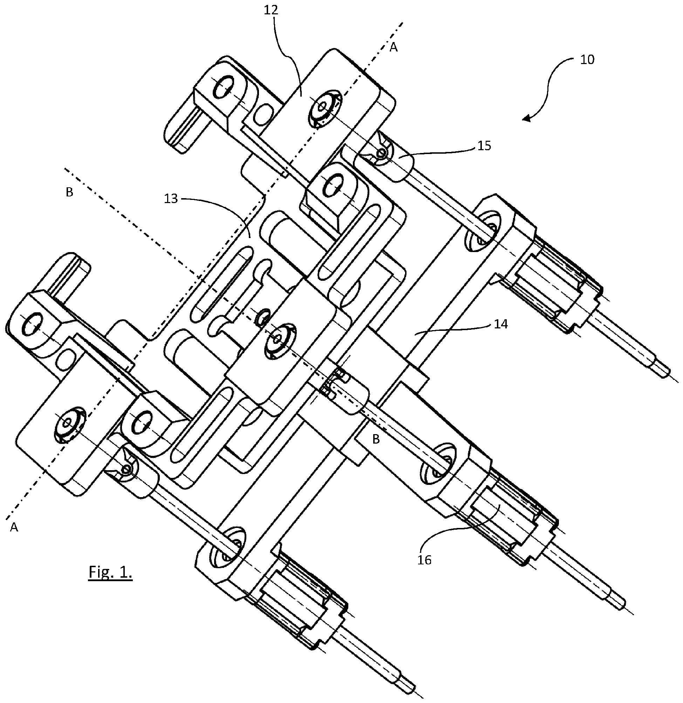

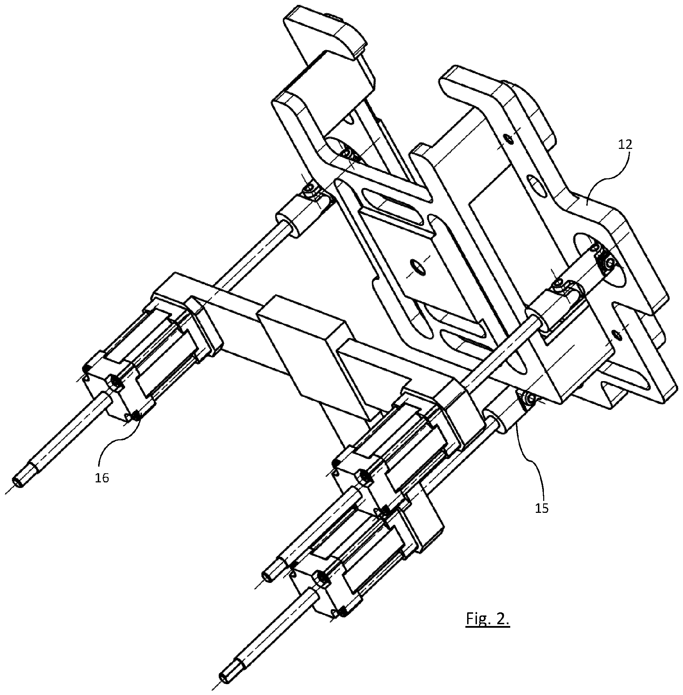

Figures 1 and 2 provide an overview of a sensor mounting apparatus 10 suitable for testing a sensor, e.g. in an anechoic chamber. The apparatus may comprise a mounting frame 12, including an inset cradle 13 for receiving a sensor (not visible) to be mounted. Frame 12/cradle 13 is ultimately mounted for tilting movement about axes A-A and B-B relative to a base frame 14, by virtue of three joint devices 15 according to the invention. Each joint device provides a transmission/connection/interface for a linear actuator 16, to control tilting of the sensor mount/frame 12.

The apparatus as shown enables, through the linear actuators 16, tilting of the sensor mount about two axes and translational movement in a z-direction, toward and away from base frame 14. A further x-y positioning device may be located behind the fixture/base 14 for a further two degrees of movement, along with a sixth, roll, axis.

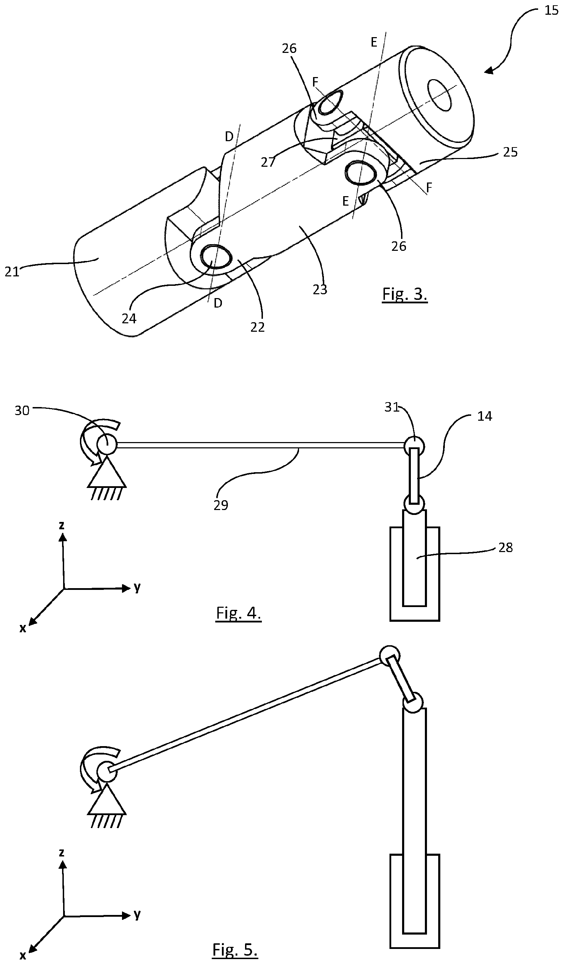

Features of the joint device 15 are provided in detail by Figure 3. For example, a first shaft or end portion 21, for connection to a linear actuator 16 (such as by a bearing interfacing with the screw thread of the actuator), is coupled to the yoke 22 of a second shaft 23 by a pivot pin 24 corresponding to a first pivot axis D-D. It will be apparent that the connection provides a first joint/hinge in the shaft/device limited to one degree of movement only. Any force urging the shaft to bend in a direction coincident to D-D is inherently resisted.

The second shaft 23 is coupled to a third shaft 25 by a two-way joint, e.g. a universal joint or cross joint, where inter-engaging yokes 26 are secured by an internal cross member/pins 27. A second pivot axis E- E, defined by the cross member 27, is parallel to D-D, whereas a third pivot axis F-F of the device is perpendicular as defined by the cross member. It will be apparent that the two-way connection provides a second joint in the shaft/device as a whole with two degrees of movement, preferably limited to two degrees of movement only. The third shaft 25 is configured for a fixed connection to an object to be articulated, e.g. the sensor mount frame 12.

The combined shaft portions 21, 23 and 25, as illustrated, are alignable along a straight line, longitudinal axis. However, the sections are able to deviate from alignment subject to the degrees of movement allowed by the hinge and universal joint.

Variations on the illustrated embodiment are possible so long as the general function is maintained. For example, a hinged elbow (one degree of movement) as a first joint in combination with a ball joint (providing at least two degrees of movement) as a second joint may be implemented, although a ball joint is generally more limited in its extent of movement. A yoke-type joint as illustrated may rotate beyond 180 degrees and up to, say, 270 degrees or more.

Figures 4 and 5 illustrate the two joints of device 15 in use, where the device is connected at one end to a linear actuator 28 and serves as a bridge to connect to a second object 29. Object 29 is able to rotate around a rotation point 30 using the linear motion of the actuator 28. This design ensures that any change in the y-axis distance between the centre axis linear actuator 28 and the connection point 31 to the second object 29 is balanced. The bearing of the second object 29 may also enable rotation around its centre axis.

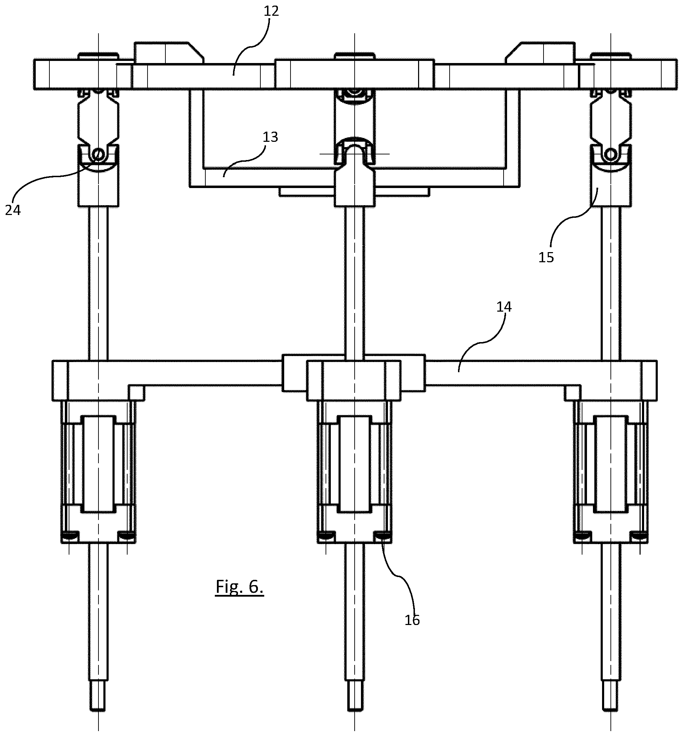

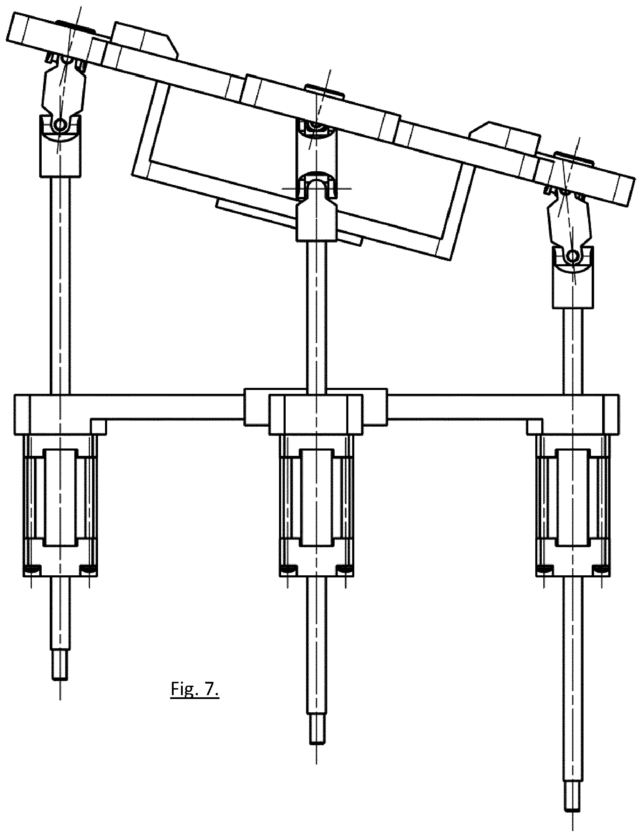

Figures 6 to 9 illustrate use of the joint device 15 in the context of the sensor mount apparatus 10 of Figures 1 and 2. Firstly, according to Figure 6, no tilt pitch/yaw of the frame 12 is yet implemented relative to a joint axis. However, a z-direction adjustment may be achieved by extending each actuator by the same amount, thereby displacing frame 12 from base 14. Secondly, according to Figure 7, a tilted pitch is achievable about axis B-B from Figure 1, e.g. relative to an antenna pivot point, that is the antenna (not shown) middle point, the position of which is needed for measurements to be taken during testing, by variously extending/retracting the actuators 16 as desired. The antenna pivot point may generally correspond to the intersection of axes A-A and B-B from Figure 1.

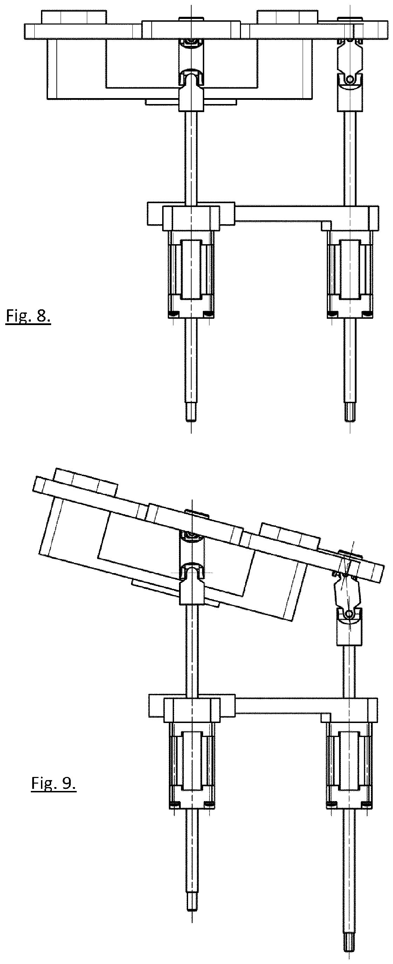

Thirdly, according to Figure 9, a yaw tilt is achievable about axis A-A from Figure 1 by extending/retracting linear actuators 16 and thereby reconfiguring the frame 12 position relative to base frame 15.

It can be noted from Figures 6 to 9 that the left and right opposite joint devices 15 are orientationally fixed with pivot pins 24 facing in the same direction (out of the page and visible), whereas the centre joint device, which has no opposite pair, is fixed with pin 24 in a perpendicular orientation to the other devices. In this way the translational movement is able to be properly controlled in accordance with the requirements of the sensor mounting device and there is no undesirable wobble.

By way of summary, the invention is generally embodied by a joint device for use with a mounting apparatus, such as used in vehicle sensor testing. The device comprises a first end section, a second intermediate connector section and a third end section, wherein a joint is provided between each section. Particularly, a hinge joint having one axis of movement connects the first and second sections, while a cross joint connects the second and third sections, enabling two axes of movement. At least two, preferably three, of the joint devices are assembled into a mounting apparatus that has a first frame moveable relative to a second frame by linear actuators. The joint devices enable controlled tilting of the first frame about yaw and pitch axes, and also translational movement in z-direction by activating the linear actuators.

## Claims

1. A joint device, comprising:
a first end portion;
a second intermediate portion; and
a third end portion;
wherein the first end portion is pivotably connected to a proximate end of the second intermediate portion by a hinge having one axis of movement, and the third end portion is pivotably connected to a distal end of the intermediate portion by a joint having two axes of movement.

2. The joint device of claim 1, wherein one of the two axes of movement of the joint is parallel to the one axis of movement of the hinge and the other axis may be perpendicular.

3. The joint device of claim 1 or 2, wherein the hinge connection between the first and second portions comprises a first yoke and a pivot pin.

4. The joint device of any preceding claim 3, wherein the pivotal connection between the second and third portions comprises two inter-engaging yokes and a cross member to provide the two axes of movement.

5. A mounting apparatus, comprising:
a first frame;
a second frame;
at least two joint devices according to any preceding claim, each coupled at one end to a linear actuator extending from the second frame toward the first frame and coupled at the other end to the first frame;
wherein extension of a linear actuator is able to cause movement, through a joint device, of the first frame relative to the second frame.

6. The mounting apparatus of claim 5, configured for yaw, pitch, and z-direction adjustment of the first frame by extension of one or more of the linear actuators.

7. The mounting apparatus of claim 6, comprising at least three joint devices spaced about the first frame, wherein two opposite joint devices have the same pivoting orientation of the hinge, and the third joint device, located between the two opposite joint devices has a perpendicular pivoting orientation of the hinge.

8. The sensor mounting apparatus of claim 6 or 7, wherein the adjustment is through an antenna pivot point of a sensor when mounted with the first frame.

9. The sensor mounting apparatus of any preceding claim 5 to 8, further comprising a translational movement device for displacing the second frame in x and/or y directions.

10. The sensor mounting apparatus of any preceding claim 5 to 9, further comprising a roll movement device for rotating the second frame about a roll axis.

11. The sensor mounting apparatus of any preceding claim 5 to 10, further comprising a robotic arm supporting the second frame and any intermediate devices.

12. The sensor mounting apparatus of any preceding claim 5 to 11, comprising a vehicle part mount for mounting a vehicle part over the field of view of a sensor mounted with the first frame.

13. The sensor mounting apparatus of any preceding claim 5 to 12, wherein the linear actuators and/or other position adjustment functions are motorised.
